# EUROPÄISCHE PATENTSCHRIFT

(11) **EP 2 709 886 B1**
(45) Veröffentlichungstag und Bekanntmachung des Hinweises auf die Patenterteilung: **22.06.2016**
(21) Anmeldenummer: 12709596.6
(22) Anmeldetag: 13.03.2012
(51) Int. Cl.: B60W 10/103, B60W 10/188, B60W 30/18, B60T 7/12, F16H 59/08

(54) **FAHRZEUG UND VERFAHREN ZUM BETREIBEN EINES FAHRZEUGES**
VEHICLE AND METHOD FOR OPERATING A VEHICLE
VÉHICULE ET PROCÉDÉ PERMETTANT DE FAIRE FONCTIONNER UN VÉHICULE

(30) Priorität: 18.05.2011 DE 102011076034
(43) Veröffentlichungstag der Anmeldung: 26.03.2014
(73) Patentinhaber: ZF Friedrichshafen AG, 88038 Friedrichshafen (DE)
(72) Erfinder: LEGNER, Jürgen, 88048 Friedrichshafen (DE)
(86) Internationale Anmeldenummer: PCT/EP2012/054339
(87) Internationale Veröffentlichungsnummer: WO 2012/156113

(56) Entgegenhaltungen:
- EP-A1- 1 820 707
- WO-A1-02/094602
- GB-A- 2 469 853
- US-A- 3 831 721
- US-A- 3 910 389
- US-A- 4 248 330

## Beschreibung

Die Erfindung betrifft ein Fahrzeug gemäß der im Oberbegriff des Patentanspruches 1 und ein Verfahren zum Betreiben eines Fahrzeuges gemäß der im Oberbegriff des Patentanspruches 5 näher definierten Art.

Ein Fahrzeug ist beispielweise gemäß dem Oberbegriff des Anspruchs 1 aus US 3 831 721 A bekannt. Ein Verfahren ist beispielweise gemäß dem Oberbegriff des Anspruchs 5 aus DE 602 12 384 T2 bekannt.

Aus der DE 602 12 384 T2 ist ein Verfahren zum Betreiben eines Fahrzeuges bzw. ein Verfahren zur Umkehr der Fahrtrichtung eines sich bewegenden Fahrzeuges bekannt, bei dem eine Bewegung einer Gangwahleinrichtung in eine Position, die eine neue beabsichtigte Fahrtrichtung angibt, erfasst wird. Ein solches Umkehrverfahren wird während eines Betriebes eines Radladers häufig durchgeführt. Beim Laden durchfährt ein Radlader jeweils wechselweise kurze Wege in Vorwärts- und Rückwärtsfahrtrichtung. Dabei wird das Fahrzeug bzw. ein Radlader beispielsweise zunächst in Vorwärtsfahrtrichtung bewegt und bei Vorliegen einer Anforderung für einen Fahrtrichtungswechsel bis zum Fahrzeugstillstand abgebremst und anschließend in Rückwärtsfahrtrichtung betrieben. Daran anschließend wird der Radlader wiederum vollständig abgebremst und anschließend wieder in Vorwärtsfahrtrichtung betrieben.

Um zu vermeiden, dass ein Motor eines Fahrzeuges bei einem fahrerseitig angeforderten Fahrtrichtungswechsel zum Bremsen des Fahrzeuges herangezogen wird und ein Kraftstoffverbrauch des Motors in unerwünschtem Umfang ansteigt, werden die Fahrbremsen des Fahrzeuges, die Radbremsen sind, abhängig vom Grad einer fahrerseitigen Betätigung eines Gaspedals des Fahrzeugs betätigt, nachdem die Gangwahleinrichtung in eine zur neuen Fahrtrichtungsposition äquivalenten Stellung überführt ist. Dabei ist es vorgesehen, dass das Ausmaß der Betätigung der Fahrbremsen mit steigender Betätigung des Gaspedals des Fahrzeuges zunimmt.

Ein Antriebstrang des Fahrzeuges umfasst einen Verbrennungsmotor in Form eines Dieselmotors, ein Automatikgetriebe bzw. ein Hauptgetriebe und einen zwischen dem Hauptgetriebe und dem Verbrennungsmotor angeordneten hydrodynamischen Drehmomentwandler. Das Hauptgetriebe ist mit einem Vorwärts-Rückwärts-Getriebe ausgeführt und eine Pumpe für die Hebehydraulik des Fahrzeugs wird über eine Ausgangswelle vom Verbrennungsmotor angetrieben. Eine Ausgangswelle des Hauptgetriebes ist mit einem Differentialgetriebe einer Radachse verbunden, auf der Antriebsräder des Fahrzeuges angeordnet sind. Die Fahrbremse ist in an sich bekannter Art und Weise jeweils im Bereich der Räder vorgesehen.

Ausgehend von einem Betriebszustand des Fahrzeuges, zu dem das als Radlader ausgeführte Fahrzeug bei einer im Hauptgetriebe eingelegten Ist-Übersetzung mit einer aktuellen Fahrzeuggeschwindigkeit in Vorwärtsfahrtrichtung betrieben wird, und bei einer fahrerseitigen Anforderung für einen Wechsel der Fahrtrichtung von Vorwärts- in Rückwärtsfahrtrichtung und gleichzeitiger Auswahl einer Übersetzung für Rückwärtsfahrt im Hauptgetriebe wird vom Fahrer die Gangwahleinrichtung in eine hierfür äquivalente Position verstellt. Die fahrerseitige Betätigung der Gangwahleinrichtung in die neue Position wird durch eine Erfassungseinrichtung erfasst, die mit einer Steuereinheit verbunden ist.

Aufgrund der Bewegung der Gangwahleinrichtung bzw. der Erfassung der neuen Position der Gangwahleinrichtung wird das Hauptgetriebe des Fahrzeugs vom Verbrennungsmotor des Fahrzeugs im Bereich des Vorwärts-Rückwärts-Getriebes entkoppelt, womit die Motorleistung nun in ihrer Gesamtheit zur Versorgung hydraulischer Funktionen über die Pumpe und andere Leistungsverbraucher in dem Fahrzeug zur Verfügung steht. Sowohl eine Motordrehzahl als auch eine von der Fahrbremse zur Verfügung gestellte Bremskraft werden erhöht, während gleichzeitig die Fahrzeitgeschwindigkeit reduziert wird.

Um das Fahrzeug bei angefordertem Fahrtrichtungswechsel abzubremsen, ist vom Fahrer bei gleichzeitig unbetätigter Fahrbremse das Gaspedal zu drücken. Dies führt zu einer gesteuerten Betätigung der Fahrbremsen des Fahrzeuges. Die Position des Gaspedals wird zu diesem Zweck durch eine zweite Erfassungseinrichtung erfasst. Dabei wird das Ausmaß der Betätigung der Fahrbremsen als Funktion der Position des Gaspedals des Fahrzeugs gesteuert, wobei die Fahrzeugverzögerung in gewünschtem Umfang linear oder nicht linear gesteuert einstellbar ist.

Nachteilig dabei ist jedoch, dass die zum Bremsen des Fahrzeuges aufzuwendende Energie aufgrund der Entkopplung der Brennkraftmaschine vom Hauptgetriebe damit vom Abtrieb des Fahrzeuges nicht für den Antrieb von mit der Brennkraftmaschine verbundenen hydraulischen Verbrauchern verwendbar bzw. rekuperierbar ist.

Bei mit hydrostatisch-mechanisch leistungsverzweigten Getriebeeinrichtungen ausgeführten Fahrzeugantriebssträngen ohne hydrodynamische Drehmomentwandler wird bei einer fahrerseitigen Anforderung zum Verzögern eines Fahrzeuges bei gleichzeitig fahrerseitig unbetätigter Betriebsbremse der Kraftfluss zwischen einer Antriebsmaschine, wie einem Dieselmotor oder dergleichen, und einem Abtrieb nicht unterbrochen und die Antriebsmaschine in einen Schubbetrieb überführt, um am Abtrieb ein entsprechendes Schubmoment anlegen zu können. Gleichzeitig wird eine Übersetzung der Getriebeeinrichtung während des Verzögerungsvorganges des Fahrzeuges vergrößert und die Bremswirkung der Antriebsmaschine verstärkt, die im Schubbetrieb keinen Kraftstoff verbraucht. Wird während eines solchen Betriebszustandsverlaufes eines Fahrzeugantriebsstranges gleichzeitig ein weiterer Verbraucher eines mit dem Fahrzeugantriebsstrang ausgeführten Fahrzeuges einer Arbeitshydraulik betätigt, ist die Schubleistung des Fahrantriebes direkt in die Fahrzeughydraulik rekuperierbar, da der Kraftfluss im Bereich des Getriebes zwischen dem Abtrieb und der Antriebsmaschine während eines Verzögerungsvorganges des Fahrzeuges dauerhaft aufrecht erhalten wird.

Bei dieser Vorgehensweise ist jedoch problematisch, dass bei Verzögerungsvorgängen eines Fahrzeuges ausgehend von höheren Fahrzeuggeschwindigkeiten die jeweils von der Antriebsmaschine zur Umsetzung der angeforderten Verzögerung des Fahrzeuges zur Verfügung zu stellende Bremswirkung nur dann realisierbar ist, wenn eine Drehzahl der Antriebsmaschine während des Verzögerungsvorganges des Fahrzeuges die Funktionsweise der Antriebsmaschine unter Umständen nachteilig beeinflussenden Werte annimmt.

Der vorliegenden Erfindung liegt daher die Aufgabe zugrunde, ein Fahrzeug und ein Verfahren zum Betreiben eines Fahrzeuges zur Verfügung zu stellen, mittels welchem eine Beeinträchtigung einer Funktionsweise einer Antriebsmaschine während einer antriebsmaschinenseitigen Unterstützung einer Verzögerung eines Fahrzeuges vermieden wird.

Erfindungsgemäß wird diese Aufgabe mit einem Fahrzeug mit den Merkmalen des Patentanspruches 1 und einem Verfahren mit den Merkmalen des Patentanspruches 5 gelöst.

Das erfindungsgemäße Fahrzeug ist mit einem eine Antriebsmaschine, eine damit wirkverbundene hydrostatisch-mechanisch leistungsverzweigte Getriebeeinrichtung und einen Abtrieb umfassenden Antriebsstrang und mit wenigstens einer Bremseinrichtung, mittels der bei einer entsprechenden fahrerseitigen Betätigung des Bremsbetätigungselementes ein Bremsmoment in den Antriebsstrang einleitbar ist, ausgeführt. Ein Antriebsmoment der Antriebsmaschine ist in Abhängigkeit einer fahrerseitigen Betätigung eines Leistungsanforderungselementes und eines Fahrtrichtungsauswahlelementes variierbar.

Erfindungsgemäß ist der Bremseinrichtung eine zusätzliche Betätigungseinrichtung zugeordnet, die mit dem Leistungsanforderungselement und/oder dem Fahrtrichtungsauswahlelement wirkverbunden ist und über die die Bremseinrichtung bei Vorliegen einer über das Leistungsanforderungselement und/oder das Fahrtrichtungsauswahlelement fahrerseitig angeforderten Verzögerung des Fahrzeuges und vorliegendem Kraftfluss zwischen der Antriebsmaschine und dem Abtrieb in einem ein Bremsmoment in den Antriebsstrang einleitenden Umfang betätigbar ist.

Damit besteht auf einfache Art und Weise die Möglichkeit, eine vorzugsweise fahrerseitig oder von einem Fahrprogramm beispielsweise während eines Fahrtrichtungswechsels oder einer Bergabfahrt des Fahrzeuges angeforderte Verzögerung eines Fahrzeuges zunächst mittels eines Schubbetriebs der Antriebsmaschine umzusetzen und bei Erreichen unzulässig hoher Drehzahlen der Antriebsmaschine die Verzögerung des Fahrzeuges durch entsprechende Betätigung der Bremseinrichtung über die zusätzliche Betätigungseinrichtung automatisiert zu unterstützen und somit eine Beeinträchtigung der Funktionsweise der Antriebsmaschine auf konstruktiv einfache Art und Weise zu vermeiden.

Erfindungsgemäß ist die Bremseinrichtung über einen vom Bremsbetätigungselement betätigbaren Ventilblock mit hydraulischem Druck zur Darstellung eines Bremsmomentes beaufschlagbar.

Sind das Leistungsanforderungselement und/oder das Fahrtrichtungsauswahlelement und das Bremsbetätigungselement über ein Steuergerät mit einer vorzugsweise als Proportionalventil ausgebildeten Ventileinrichtung wirkverbunden, über die die Bremseinrichtung mit hydraulischem Druck zur Darstellung eines Bremsmomentes beaufschlagbar ist, ist die Bremseinrichtung mit geringem Steuer- und Regelaufwand und auf konstruktiv einfache Art und Weise während eines Verzögerungsvorganges eines Fahrzeuges automatisiert betätigbar, um Beschädigungen der Antriebsmaschine zu vermeiden.

Erfindungsgemäß ist eine Wechselventileinrichtung vorgesehen, über die die Bremseinrichtung entweder vom Ventilblock oder von der Ventileinrichtung mit hydraulischem Druck beaufschlagbar ist.

In Abhängigkeit des jeweils vorliegenden Anwendungsfalles umfasst die Bremseinrichtung eine Betriebsbremse des Fahrzeuges mit einem oder mit zwei unabhängigen Bremskreisen und/oder weist die Bremseinrichtung eine in einem Gelenkwellenstrang vorgesehene Haltebremse auf, über die jeweils bedarfsgerecht die zur Vermeidung einer Schädigung der Antriebsmaschine erforderliche Bremsleistung während einer Verzögerung des Fahrzeuges in den Antriebsstrang einleitbar ist.

Bei dem erfindungsgemäßen Verfahren zum Betreiben eines Fahrzeuges mit einem eine Antriebsmaschine, eine damit wirkverbundene hydrostatisch-mechanisch leistungsverzweigte Getriebeeinrichtung und einen Abtrieb umfassenden Antriebsstrang und mit wenigstens einer Bremseinrichtung während einer angeforderten Verzögerung eines Fahrzeuges bei fahrerseitig unbetätigter Bremseinrichtung sowie zwischen der Antriebsmaschine und dem Abtrieb hergestellten Kraftfluss wird im Bereich des Abtriebs ein antriebsmaschinenseitiges Schubmoment zur Verfügung gestellt.

Erfindungsgemäß wird bei Überschreiten einer definierten Drehzahlschwelle der Antriebsmaschine die Bremseinrichtung in einem ein Bremsmoment in den Antriebsstrang einleitenden Umfang betätigt, um eine Beeinträchtigung einer Funktionsweise der Antriebsmaschine auf einfache Art und Weise zu vermeiden.

Erfindungsgemäß wird eine Übersetzung der Getriebeeinrichtung bei Vorliegen einer Fahrerwunschvorgabe zum Verzögern des Fahrzeuges vergrößert, womit das über die Antriebsmaschine zur Verfügung stellbare Schubmoment auf einfache Art und Weise erhöht wird.

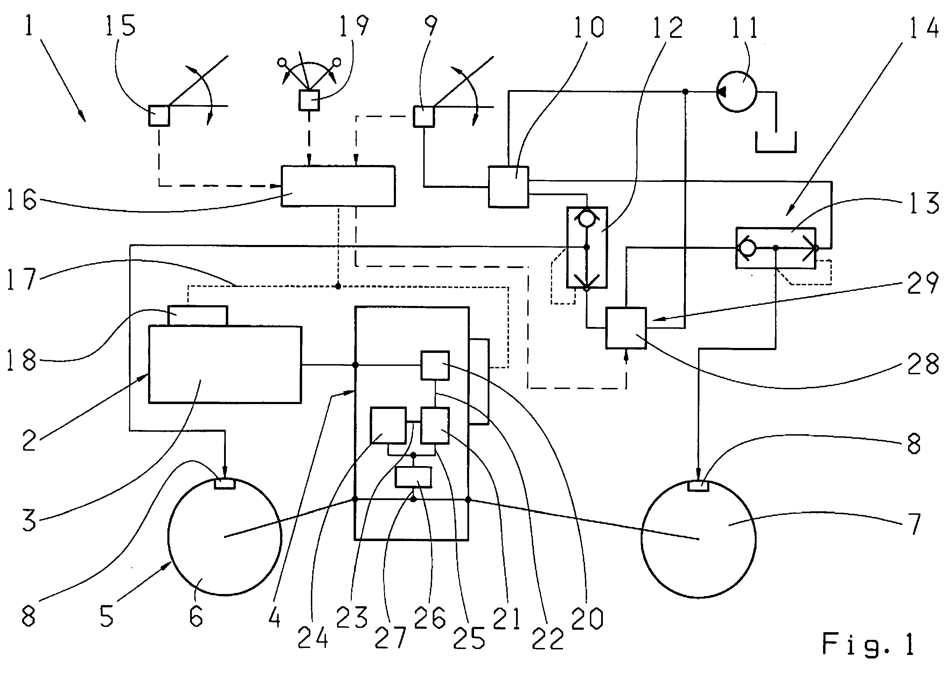

Weitere Vorteile und vorteilhafte Ausführungsformen der des erfindungsgemäßen Gegenstandes ergeben sich aus den Patentansprüchen und dem nachfolgend unter Bezugnahme auf die Zeichnung prinzipmäßig beschriebenen Ausführungsbeispiel.

Die einzige Figur der Zeichnung zeigt ein Funktionsschema eines Fahrzeuges.

In der Figur ist ein Funktionsschema eines Fahrzeuges 1 mit einem Antriebsstrang 2 dargestellt, der eine vorliegend als Dieselmotor ausgeführte Antriebsmaschine 3, eine damit wirkverbundene hydrostatisch-mechanisch leistungsverzweigte Getriebeeinrichtung 4 und einen Abtrieb 5 bzw. eine Fahrzeugvorderachse 6 und Fahrzeughinterachse 7 umfasst. Sowohl der Fahrzeugvorderachse 6 als auch der Fahrzeughinterachse 7 ist jeweils eine Bremseinrichtung 8 zugeordnet, die vorliegend eine Betriebsbremse mit zwei unabhängigen Bremskreisen aufweist.

Die Bremseinrichtung 8 ist von einem Fahrer über ein Bremsbetätigungselement 9 bzw. ein Bremspedal betätigbar, wobei bei einer entsprechenden fahrerseitigen Betätigung des Bremsbetätigungselementes 9 über die Bremseinrichtung 8 ein Bremsmoment in den Antriebsstrang 2 einleitbar ist. Hierfür ist das Bremsbetätigungselement 9 mit einem Ventilblock 10 verbunden, in dessen Bereich ein von einer Pumpeneinrichtung 11 der hydraulischen Bremseinrichtung 8 zur Verfügung gestellter Hydraulikdruck in Richtung einer vorliegend zwei Wechselventile 12 und 13 umfassenden Wechselventileinrichtung 14 weiterleitbar ist. Bei entsprechend über den Ventilblock 10 an der Wechselventileinrichtung 14 anliegendem hydraulischem Druck wird der hydraulische Druck über die Wechselventile 12 und 13 in Richtung der im Bereich der Fahrzeugvorderachse 6 und der Fahrzeughinterachse 7 angeordneten Bremseinrichtung 8 weitergeleitet und in an sich bekannter Art und Weise im Bereich der Fahrzeugvorderachse 6 und der Fahrzeughinterachse 7 ein entsprechendes Bremsmoment in den Antriebsstrang 2 eingeleitet und das Fahrzeug 1 entsprechend verzögert.

Des Weiteren umfasst das Fahrzeug 1 ein Leistungsanforderungselement 15 in dessen Bereich der Fahrer jeweils eine Fahrerwunschvorgabe bzw. eine Anforderung für ein gewünschtes und von der Antriebsmaschine 3 zur Verfügung zu stellendes Drehmoment an eine Fahrzeugelektronik 16 übertragbar ist. Die Fahrzeugelektronik 16 ist hierfür über einen sogenannten CAN-Bus 17 mit einem der Antriebsmaschine 3 zugeordneten Steuergerät 18 signaltechnisch verbunden.

Zusätzlich ist das Fahrzeug 1 mit einem Fahrtrichtungsauswahlelement 19 bzw. einem Fahrschalter ausgeführt, über den neben einer Fahrtrichtung des Fahrzeuges 1 in Vorwärtsfahrtrichtung oder in Rückwärtsfahrtrichtung in der Getriebeeinrichtung 4 verschiedene Übersetzungsbereiche und auch ein sogenannter Neutralbetriebszustand der Getriebeeinrichtung einlegbar ist, zu dem ein Kraftfluss zwischen der Antriebsmaschine 3 und dem Abtrieb 5 im Bereich der Getriebeeinrichtung 4 unterbrochen ist.

Ein Wechsel zwischen einem Vorwärtsfahrtbetriebsmodus und einem Rückwärtsfahrtbetriebsmodus des Fahrzeuges 1 erfolgt über eine sogenannte Reversiereinheit 20, in deren Bereich eine Drehrichtung der Antriebsmaschine 3 jeweils in eine für eine Vorwärtsfahrtrichtung und eine Rückwärtsfahrtrichtung äquivalente Drehrichtung im Bereich des Abtriebs 5 wandelbar ist. Die Reversiereinheit 20 ist vorliegend im Kraftfluss des Antriebsstranges 2 zwischen der Antriebsmaschine 3 und einem zur Leistungsverzweigung vorgesehenen Planetentrieb 21 angeordnet, wobei die Reversiereinheit im Bereich einer ersten Welle 22 mit dem Planetentrieb 21 gekoppelt ist. Zusätzlich ist der Planetentrieb 21 im Bereich einer weiteren Welle 23 mit einem Hydromodul 24 und im Bereich einer dritten Welle 25 wiederum sowohl mit dem Hydromodul 24 als auch mit einer Bereichsschaltung 26 wirkverbunden. Im Bereich der Bereichsschaltung 26 werden wiederum in an sich bekannter Art und Weise durch Betätigen verschiedener Schaltelemente verschiedene Übersetzungsbereiche eingelegt, innerhalb welchen eine Übersetzung der Getriebeeinrichtung 4 über das Hydromodul 24 jeweils stufenlos variierbar ist. Das im Bereich der Bereichsschaltung 26 entsprechend gewandelte Drehmoment wird über eine Abtriebswelle 27 in Richtung des Abtriebs 5 weitergeleitet.

Liegt eine beispielsweise fahrerseitig ausgelöste Anforderung für eine Verzögerung des Fahrzeuges 1, beispielsweise durch eine entsprechende Betätigung des Fahrtrichtungsauswahlelementes 19 für einen Fahrtrichtungswechsel des Fahrzeugesl vor, ist das Fahrzeug 1 ausgehend von der aktuellen Ist-Fahrzeuggeschwindigkeit in Richtung des Fahrzeugstillstandes abzubremsen und anschließend in entgegengesetzter Fahrtrichtung in Abhängigkeit der Betätigung des Leistungsanforderungselementes 15 wiederum zu beschleunigen und mit der angeforderten Fahrtgeschwindigkeit zu betreiben. Hierfür wird der Kraftfluss im Antriebsstrang 2 zwischen der Antriebsmaschine 3 und dem Abtrieb 5 aufrecht erhalten und gleichzeitig die Antriebsmaschine 3 während der Verzögerung des Fahrzeuges 1 in Richtung des Fahrzeugstillstandes in einen Schubbetrieb überführt, in dem über die Antriebsmaschine 3 am Abtrieb 5 ein das Fahrzeug verzögerndes Schubmoment anlegbar ist, wobei die Antriebsmaschine 3 im Schubbetrieb keinen Kraftstoff verbraucht. Gleichzeitig wird die Übersetzung der Getriebeeinrichtung 4 erhöht, um am Abtrieb 5 ein möglichst hohes antriebsmaschinenseitiges Schubmoment anlegen zu können.

Wird im Bereich des Steuergerätes 18 eine Drehzahl der Antriebsmaschine 3 größer als eine definierte Drehzahlschwelle bei gleichzeitig fahrerseitig unbetätigter Bremseinrichtung ermittelt, wird die Bremseinrichtung 8 in der nachfolgend näher beschriebenen Art und Weise in einem ein Bremsmoment in den Antriebsstrang 2 einleitenden Umfang betätigt.

Das Leistungsanforderungselement 15 und das Fahrtrichtungsauswahlelement 19 sowie das Bremsbetätigungselement 9 sind über die Fahrzeugelektronik 16 und den CAN-Bus 17 mit einer zusätzlichen Betätigungseinrichtung 29 wirkverbunden, die eine als Proportionalventil ausgebildete Ventileinrichtung 28 aufweist, über die die Bremseinrichtung 8 mit hydraulischem Druck zur Darstellung eines Bremsmomentes beaufschlagbar ist. Das bedeutet, dass bei Ermitteln einer Drehzahl der Antriebsmaschine 3 größer als die definierte Drehzahlschwelle die Ventileinrichtung 28 von der Fahrzeugelektronik 16 betätigt wird und der von der Pumpeneinrichtung 11 an der Ventileinrichtung 28 anliegende hydraulische Druck im Bereich der Ventileinrichtung 28 in Richtung der Wechselventile 12 und 13 weitergeleitet wird. Der dann an den Wechselventilen 12 und 13 anliegende hydraulische Druck der Pumpeneinrichtung 11 wird wiederum in Richtung der Bremseinrichtung 8 weitergeleitet und erzeugt im Bereich der Fahrzeugvorderachse 6 und der Fahrzeughinterachse 7 jeweils ein Bremsmoment, um das Fahrzeug in gewünschtem Umfang zu verzögern und gleichzeitig die Antriebsmaschine 3 zu entlasten und die Drehzahl der Antriebsmaschine 2 auf ein zulässiges Maß reduzieren zu können.

Mit der vorbeschriebenen Ausführung des Fahrzeuges 1 mit dem Ventilblock 10, der Wechselventileinrichtung 14 und der zusätzlichen Ventileinrichtung 28 ist die Bremswirkung der Bremseinrichtung 8 entweder fahrerseitig über das Bremsbetätigungselement 9 oder automatisiert über die Fahrzeugelektronik 16 anforderbar, wobei die Druckversorgung der Ventileinrichtung 28 entweder in der in der Figur dargestellten Art und Weise direkt von der Pumpeneinrichtung 11 oder über den Ventilblock 10 der Bremseinrichtung 8 erfolgen kann.

Mit dem erfindungsgemäßen Fahrzeug und der erfindungsgemäßen Vorgehensweise wird die Antriebsmaschine eines Antriebsstranges eines Fahrzeuges während einer Verzögerung eines Fahrzeuges auf einfache Art und Weise vor einer die Funktionsweise einer Antriebsmaschine irreversibel beeinträchtigenden Überdrehzahl geschützt und gleichzeitig eine angeforderte bzw. gewünschte Verzögerung eines Fahrzeuges umgesetzt. Dabei hat der Fahrer des erfindungsgemäßen Fahrzeuges immer die Möglichkeit, die automatisiert dargestellte Bremswirkung durch Betätigen des Bremsbetätigungselementes zu erhöhen.

In Abhängigkeit des jeweils vorliegenden Anwendungsfalles ist auch ein vereinfachtes System mit nur einem Bremskreis zur automatisierten Bremsunterstützung während eines Verzögerungsvorganges eines Fahrzeuges verwendbar, wobei die Möglichkeit besteht, entweder nur die Vorder- oder nur die Hinterachsbremse einzusetzen.

Wird eine Fahrzeugantriebsstrang mit einer vorzugsweise als Lamellenbremse ausgeführten Haltebremse im Bereich eines Gelenkwellenstranges ausgeführt, ist auch eine solche Haltebremse automatisiert betätigbar, um während eines angeforderten Verzögerungsvorganges eines Fahrzeuges in den Antriebsstrang ein Bremsmoment einzuleiten und eine Antriebsmaschine vor Überdrehzahlen zu schützen. Bei einem solchen Antriebsstrang ist ein Eingriff in den Betriebszustand einer Betriebsbremse eines Fahrzeuges nicht notwendig, wenn über diese Haltebremse eine ausreichende Bremswirkung zur Verfügung steht.

### Bezugszeichen

- 1: Fahrzeug
- 2: Antriebsstrang
- 3: Antriebsmaschine
- 4: Getriebeeinrichtung
- 5: Abtrieb
- 6: Fahrzeugvorderachse
- 7: Fahrzeughinterachse
- 8: Bremseinrichtung
- 9: Bremsbetätigungselement
- 10: Ventilblock
- 11: Pumpeneinrichtung
- 12, 13: Wechselventil
- 14: Wechselventileinrichtung
- 15: Leistungsanforderungselement
- 16: Fahrzeugelektronik
- 17: CAN-Bus
- 18: Steuergerät
- 19: Fahrtrichtungsauswahlelement
- 20: Reversiereinheit
- 21: Planetentrieb
- 22, 23: Welle des Planetentriebs
- 24: Hydromodul
- 25: Welle des Planetentriebs
- 26: Bereichsschaltung
- 27: Ausgangswelle
- 28: Ventileinrichtung
- 29: Betätigungseinrichtung

## Patentansprüche

1. Fahrzeug (1) mit einem eine Antriebsmaschine (3), eine damit wirkverbundene hydrostatisch-mechanisch leistungsverzweigte Getriebeeinrichtung (4) und einen Abtrieb (5) umfassenden Antriebsstrang (2) und mit wenigstens einer Bremseinrichtung (8), mittels der bei einer entsprechenden fahrerseitigen Betätigung eines Bremsbetätigungselementes (9) ein Bremsmoment in den Antriebsstrang (2) einleitbar ist, wobei ein Antriebsmoment der Antriebsmaschine (3) in Abhängigkeit einer fahrerseitigen Betätigung eines Leistungsanforderungselementes (15) und eines Fahrtrichtungsauswahlelementes (19) variierbar ist, wobei der Bremseinrichtung (8) eine zusätzliche Betätigungseinrichtung (29) zugeordnet ist, die mit dem Leistungsanforderungselement und/oder dem Fahrtrichtungsauswahlelement wirkverbunden ist und über die die Bremseinrichtung bei Vorliegen einer über das Leistungsanforderungselement und/oder das Fahrtrichtungsauswahlelement fahrerseitig angeforderten Verzögerung des Fahrzeuges und vorliegendem Kraftfluss zwischen der Antriebsmaschine und dem Abtrieb in einem ein Bremsmoment in den Antriebsstrang einleitendem Umfang betätigbar ist, wobei die Bremseinrichtung (8) über einen vom Bremsbetätigungselement (9) betätigbaren Ventilblock (10) mit hydraulischem Druck zur Darstellung eines Bremsmomentes beaufschlagbar ist wobei das Leistungsanforderungselement (15) und/oder das Fahrtrichtungsauswahlelement (19) und das Bremsbetätigungselement (9) über eine Fahrzeugelektronik (16) mit einer vorzugsweise als Proportionalventil ausgebildeten Ventileinrichtung der Betätigungseinrichtung (29) wirkverbunden ist, über die die Bremseinrichtung (8) mit hydraulischem Druck zur Darstellung eines Bremsmomentes beaufschlagbar ist, **dadurch gekennzeichnet, dass** eine Wechselventileinrichtung (14) vorgesehen ist, über die die Bremseinrichtung (8) entweder vom Ventilblock (10) oder von der Ventileinrichtung (28) mit hydraulischem Druck beaufschlagbar ist.

2. Fahrzeug nach einem der Ansprüche 1, **dadurch gekennzeichnet, dass** die Bremseinrichtung (8) eine Betriebsbremse des Fahrzeuges (2) mit zwei unabhängigen Bremskreisen umfasst.

3. Fahrzeug nach einem der Ansprüche 1, **dadurch gekennzeichnet, dass** die Bremseinrichtung eine Betriebsbremse des Fahrzeuges mit einem unabhängigen Bremskreis umfasst.

4. Fahrzeug nach einem der Ansprüche 1, **dadurch gekennzeichnet, dass** die Bremseinrichtung eine in einem Gelenkwellenstrang vorgesehene Haltebremse aufweist.

5. Verfahren zum Betreiben eines Fahrzeuges (1) mit einem eine Antriebsmaschine (3), eine damit wirkverbundene hydrostatisch-mechanisch leistungsverzweigte Getriebeeinrichtung (4) und einen Abtrieb (5) umfassenden Antriebsstrang (2) und mit wenigstens einer Bremseinrichtung (8) während einer angeforderten Verzögerung eines Fahrzeuges (1) bei fahrerseitig unbetätigter Bremseinrichtung (8), wobei ein Kraftfluss zwischen der Antriebsmaschine (3) und dem Abtrieb (5) hergestellt ist, **dadurch gekennzeichnet, dass** eine Übersetzung der Getriebeeinrichtung (4) bei Vorliegen einer Vorgabe zum Verzögern des Fahrzeuges (1) vergrößert wird und dadurch im Bereich des Abtriebs (5) ein antriebsmaschinenseitiges Schubmoment anliegt, wobei die Bremseinrichtung (8) bei Vorliegen einer Drehzahl der Antriebsmaschine (3) größer als eine definierte Drehzahlschwelle in einem ein Bremsmoment in den Antriebsstrang (2) einleitendem Umfang betätigt wird.

6. Verfahren nach Anspruch 5, **dadurch gekennzeichnet, dass** die Vorgabe zum Verzögern eines Fahrzeuges (1) von einem Fahrer durch Abgabe einer Anforderung für einen Fahrtrichtungswechsel ergeht.

## Claims

1. Vehicle (1) having a drive train (2) which comprises a drive machine (3), a hydrostatic/mechanical power-split transmission device (4) which is operatively connected to the said drive machine (3), and an output (5), and having at least one brake device (8), by means of which a braking moment can be introduced into the drive train (2) in the case of a corresponding driver-side actuation of a brake actuating element (9), a drive moment of the drive machine (3) being variable in a manner which is dependent on a driver-side actuation of a power requirement element (15) and a driving direction selection element (19), the brake device (8) being assigned an additional actuating device (29) which is operatively connected to the power requirement element and/or the driving direction selection element and via which the brake device can be actuated to an extent which introduces a braking moment into the drive train if a retardation of the vehicle which is requested on the driver side via the power requirement element and/or the driving direction selection element is present and a force flow is present between the drive machine and the output, it being possible for the brake device (8) to be loaded with hydraulic pressure in order to produce a braking moment via a valve block (10) which can be actuated by the brake actuating element (9), the power requirement element (15) and/or the driving direction selection element (19) and the brake actuating element (9) being operatively connected via vehicle electronics (16) to a valve device of the actuating device (29), which valve device is preferably configured as a proportional valve and via which the brake device (8) can be loaded with hydraulic pressure in order to produce a braking moment, **characterized in that** a two-way valve device (14) is provided, via which the brake device (8) can be loaded with hydraulic pressure either by the valve block (10) or by the valve device (28).

2. Vehicle according to Claim 1, **characterized in that** the brake device (8) comprises a service brake of the vehicle (2) with two independent brake circuits.

3. Vehicle according to Claim 1, **characterized in that** the brake device comprises a service brake of the vehicle with an independent brake circuit.

4. Vehicle according to Claim 1, **characterized in that** the brake device has a holding brake which is provided in an articulated shaft train.

5. Method for operating a vehicle (1) having a drive train (2) which comprises a drive machine (3), a hydrostatic/mechanical power-split transmission device (4) which is operatively connected to the said drive machine (3), and an output (5), and having at least one brake device (8) during a requested retardation of a vehicle (1) if the brake device (8) is not actuated on the driver side, a force flow being produced between the drive machine (3) and the output (5), **characterized in that**, if a demand to retard the vehicle (1) is present, a transmission ratio of the transmission device (4) is increased and the drive machine-side over-run torque prevails as a result in the region of the output (5), the brake device (8) being actuated to an extent which introduces a braking moment into the drive train (2) if a rotational speed of the drive machine (3) is present which is greater than a defined rotational speed threshold.

6. Method according to Claim 5, **characterized in that** the demand to retard a vehicle (1) is issued by a driver by way of the submission of a request for a driving direction change.

## Revendications

1. Véhicule (1) comprenant une chaîne cinématique (2) comprenant un moteur d'entraînement (3), un dispositif de transmission (4) à puissance partagée de manière hydrostatique-mécanique en liaison fonctionnelle avec celui-ci, et une prise de force (5), et comprenant au moins un dispositif de freinage (8) au moyen duquel, dans le cas d'un actionnement correspondant par le conducteur d'un élément d'actionnement des freins (9), un couple de freinage peut être introduit dans la chaîne cinématique (2), un couple d'entraînement du moteur d'entraînement (3) pouvant être varié en fonction d'un actionnement par le conducteur d'un élément de demande de puissance (15) et d'un élément de sélection du sens de conduite (19), le dispositif de freinage (8) étant associé à un dispositif d'actionnement supplémentaire (29) qui est en liaison fonctionnelle avec l'élément de demande de puissance et/ou avec l'élément de sélection du sens de conduite et par le biais duquel le dispositif de freinage peut être actionné dans une mesure introduisant un couple de freinage dans la chaîne cinématique, en cas d'un ralentissement du véhicule demandé par le conducteur par le biais de l'élément de demande de puissance et/ou de l'élément de sélection du sens de conduite et en présence d'un flux de forces entre le moteur d'entraînement et la prise de force, le dispositif de freinage (8) pouvant être sollicité avec une pression hydraulique pour établir un couple de freinage par le biais d'un bloc-soupape (10) pouvant être actionné par l'élément d'actionnement des freins (9), l'élément de demande puissance (15) et/ou l'élément de sélection du sens de conduite (19) et l'élément d'actionnement des freins (9) étant connectés fonctionnellement par le biais d'une électronique de véhicule (16) à un dispositif de soupape du dispositif d'actionnement (29) réalisé de préférence sous forme de soupape proportionnelle, par le biais duquel le dispositif de freinage (8) peut être sollicité avec une pression hydraulique pour établir un couple de freinage, **caractérisé en ce qu'**il est prévu un dispositif de soupape d'échange (14) par le biais duquel le dispositif de freinage (8) peut être sollicité avec une pression hydraulique soit par le bloc-soupape (10) soit par le dispositif de soupape (28).

2. Véhicule selon la revendication 1, **caractérisé en ce que** le dispositif de freinage (8) comprend un frein de service du véhicule (2) avec deux circuits de freinage indépendants.

3. Véhicule selon la revendication 1, **caractérisé en ce que** le dispositif de freinage comprend un frein de service du véhicule avec un circuit de freinage indépendant.

4. Véhicule selon la revendication 1, **caractérisé en ce que** le dispositif de freinage présente un frein de maintien prévu dans une chaîne de raccordement d'arbres articulés.

5. Procédé pour faire fonctionner un véhicule (1) comprenant une chaîne cinématique (2) comprenant un moteur d'entraînement (3), un dispositif de transmission (4) à puissance partagée de manière hydrostatique-mécanique en liaison fonctionnelle avec celui-ci, et une prise de force (5), et comprenant au moins un dispositif de freinage (8) pendant un ralentissement requis d'un véhicule (1) lorsque le dispositif de freinage (8) n'est pas actionné par le conducteur, un flux de forces entre le moteur d'entraînement (3) et la prise de force (5) étant établi, **caractérisé en ce qu'**une démultiplication du dispositif de transmission (4) est augmentée en cas de prescription de ralentissement du véhicule (1) et de ce fait un couple de poussée du côté du moteur d'entraînement s'applique dans la région de la prise de force (5), le dispositif de freinage (8), en présence d'une vitesse de rotation du moteur d'entraînement (3) supérieure à un seuil de vitesse de rotation défini, étant actionné dans une mesure introduisant un couple de freinage dans la chaîne cinématique (2).

6. Procédé selon la revendication 5, **caractérisé en ce que** la prescription de ralentissement d'un véhicule (1) par un conducteur s'effectue par l'émission d'une demande de changement de sens de conduite.
